# EUROPEAN PATENT APPLICATION

(11) **EP 1 531 624 A1**
(43) Date of publication of application: **18.05.2005**
(21) Application number: 04026076.2
(22) Date of filing: 03.11.2004
(51) Int. Cl.: H04N 7/00, H04N 5/00, G06F 17/60

(54) **System, method and device for selected content distribution**

(30) Priority: 05.11.2003 US 701180
(71) Applicant: ContentGuard Holdings, Inc., Wilmington, Delaware 19803 (US)
(72) Inventor: Raley, Michael, Downey, CA 90242 (US); Chen, Eddie J., Ranchos Palos Verdes, CA 90275 (US); Gilliam, Charles P., Darien, CT 06820 (US)
(74) Representative: Grünecker, Kinkeldey, Stockmair & Schwanhäusser Anwaltssozietät

(57) **Abstract**

A method, system, device, and computer program product for distributing content to a content consumption device, including detecting an action performed on the content consumption device that makes available a channel of the device by performance of the action; selecting content to be played on the device on the available channel; and playing the selected content on the device on the available channel.

## Description

### BACKGROUND OF THE INVENTION

### Field of the Invention

The present invention generally relates to content distribution and more particularly to a system, method, and device for selected content distribution, such as advertising content distribution.

### DISCUSSION OF THE BACKGROUND

Traditional television advertising (e.g., broadcast) involves interrupting preferred content with unrelated segments of advertising content. Since the content needs to be watched "live" the consumer views the unrelated advertising content waiting for the preferred content to resume playing.

In recent years, content consumption devices, for example, recording and/or playback devices, such as personal video recorders (PVR's), and the like, have been introduced, for example, including devices which can record broadcast audio and/or video content to some form of memory, for example, random access memory, computer hard disk drives, etc. Because recording and playing back the content is extremely convenient for the consumer, these devices are popular. For example, TiVo is a brand name of a kind of PVR. Another example is Windows XP Media Center Edition, which incorporates the PVR functionality in a personal computer (PC).

Generally, PVR's have features, such as pause, fast forward, rewind, commercial skip, etc., (also referred to as trick play features). These features effectively eliminate the need to watch, for example, non-preferred advertising content in order to resume watching preferred content, when watching recorded content. However, as these devices increase in popularity, the traditional advertising market is at risk.

### SUMMARY OF THE INVENTION

Therefore, there is a need for a system and method that can be used to minimize the risks posed to the advertising market by content consumption devices, such as recording and/or playback devices, such as personal video recorders, etc., so that, for example, new forms of advertising related to broadcast content can be provided in order to maintain the advertising subsidized broadcast market. The above and other needs are addressed by the system, method, device, and computer program product of the exemplary embodiments, which include, for example, inserting selected content, such as advertising content, into unused or freed up audio or video channels of a content consumption device, such as personal video recorder. Generally, a device or system according to the exemplary embodiments can have access to preferred content and selected content, such as advertising content, in audio and/or video forms. The exemplary device or system can monitor trick play functionality, such as pause, fast forward, rewind, commercial skip, etc., on a content consumption device, for example, during preferred content playback, and then insert the selected content, such as advertising content, on the available channel(s).

Accordingly, in one aspect of the present invention there is provided a method, system, device, and computer program product for distributing content to a content consumption device, including detecting an action performed on the content consumption device that makes available a channel of the device by performance of the action; selecting content to be played on the device on the available channel; and playing the selected content on the device on the available channel.

Still other aspects, features, and advantages of the present invention are readily apparent from the following detailed description, simply by illustrating a number of exemplary embodiments and implementations, including the best mode contemplated for carrying out the present invention. The present invention also is capable of other and different embodiments, and its several details can be modified in various respects, all without departing from the spirit and scope of the present invention. Accordingly, the drawings and descriptions are to be regarded as illustrative in nature, and not as restrictive.

### BRIEF DESCRIPTION OF THE DRAWINGS

The embodiments of the present invention are illustrated by way of example, and not by way of limitation, in the figures of the accompanying drawings and in which like reference numerals refer to similar elements and in which:

FIG. 1 is a top-level flowchart illustrating a process for delivering preferred and advertising content, according to an exemplary embodiment;

FIG. 2 is a diagram of a system or device for delivering preferred and advertising content, according to an exemplary embodiment; and

FIG. 3 is a flowchart illustrating a process for delivering preferred and advertising content in the system or device of FIG. 2, according to an exemplary embodiment.

### DETAILED DESCRIPTION OF THE PREFERRED EMBODIMENTS

Generally, the exemplary embodiments deal with the above-noted problems to the advertising market posed by content consumption devices, for example, including recording and/or playback devices, such as personal video recorders (PVRs), non-recording and/or non-playback devices, and the like. In an exemplary embodiment, a device or system can be configured so as to require commercials be watched. For example, an exemplary device or system can be configured to recognize commercial or advertising content and disable the ability of the device to perform trick play functionality, such as pause, fast forward, rewind, commercial skip, etc., during commercial or advertising content distribution. In a further exemplary embodiment, a user of the device or system optionally can agree to watch a commercial or advertisement that can be related to the content being viewed (e.g., referred to as Ad Telescoping). The exemplary embodiments can leverage available screen time, audio time, etc., for example, to play back commercials, advertisements, other selected content, etc.

Thus, an exemplary method and system is provided for inserting selected content, such as advertising content, into an audio and/or video channel of a content consumption device, such as personal video recorder, for example, during times when such a channel is not being used for playing of preferred content. The exemplary embodiments can be implemented such that a consumer has no choice with respect to the playing of advertising content, wherein such functionality can be built into the exemplary device or system and or media used by the exemplary system or device. In further exemplary embodiment, the consumer can agree to the playing of advertising content during available airtime, to the playing of certain kinds of advertising content during available airtime, to the playing of advertising content during certain available airtime (e.g., when a video or audio channel is idle but not during trick play), to the playing of certain advertising content during certain available airtime, and the like.

Such agreements of the consumer to the playing of advertising content can optionally be in exchange for some type of benefit to the consumer. For example, such a benefit can be configured to be variable depending, for example, on the type of agreement, type of advertisement, volume of use, and the like. In further exemplary embodiments, the level of benefit can vary based on the volume of advertising content delivered, the benefit can be lower if the consumer agrees to play of only certain advertising, such as personalized targeting advertisement versus other types of advertising, etc.

In addition, the exemplary embodiments can be employed where a distribution means exists to make the preferred and advertisement content available to the consumer. For example, the available content can be segmented and labeled as "preferred," "personalized advertisement," "regional advertisement," and the like, and distributed to the content consumption device without a need for recording.

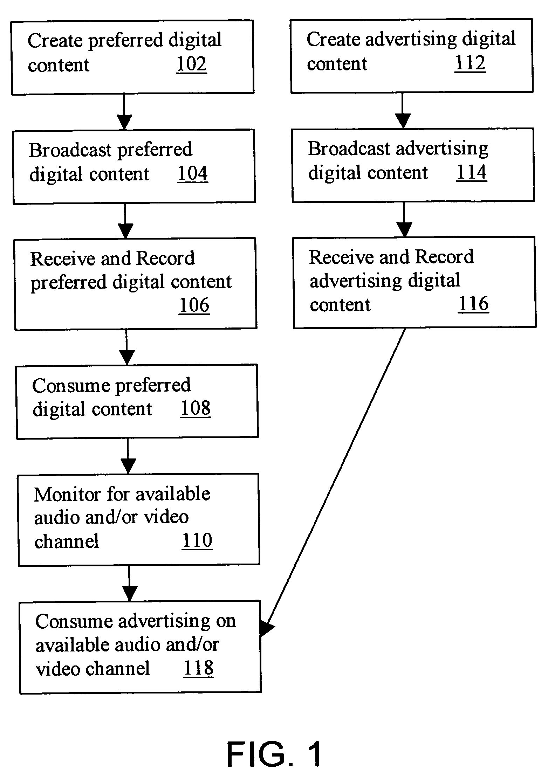

Referring now to the drawings, wherein like reference numerals designate identical or corresponding parts throughout the several views, and more particularly to FIG. 1 thereof, there is illustrated a top-level flowchart of a process for delivering preferred and advertising content to a content consumption device, according to an exemplary embodiment. In FIG. 1, both of such forms of content can be distributed via any suitable number of mechanisms, such as over the air broadcast, internet broadcasts, cable broadcasts, satellite broadcasts, recorded media broadcasts, etc. Thus, a device or system of the exemplary embodiments can have available to it both the preferred and advertising content (e.g., digital and/or analog content), for example, via steps 102-106 and 112-116.

At step 108, the user of the device or system can select preferred content for consumption, such as viewing, and at step 110 a device, module or component within the exemplary device or system can be configured to monitor the usage of the preferred content, and identify when there is an available audio or video channel, for example, based on any suitable event or state, such as selection or initiation of a screen saver mode, stop, pause, fast forward, rewind, commercial skip, slide show, radio mode, a proprietary feature, etc. At step 118, the exemplary device or system can be configured, for example, to pull selected advertising content from an advertising content repository (e.g., a memory, a hard disk, recording media, a remote repository, etc.) and insert the selected content into the available channel of the exemplary device or system for consumption by the user.

Various types of content can be employed by the exemplary device or system. For example, one kind of preferred content and two kinds of advertising content can be employed, two kinds of preferred content and two kinds of advertising content can be employed, wherein the advertising content that is selected for delivery depends on which preferred content is in use, etc.

In addition, the preferred and selected content can include any suitable type of content, wherein the selected content need not be advertisements. For example, the selected content can include a video on a short subject, a cartoon, soothing music, a personal message, and the like. Further, the advertising content can even be content that is also preferred content.

Further, the preferred and selected content can be displayed simultaneously. For example, the selected content, such as advertising content in the form of a text banner streaming along the bottom of a screen of the content consumption device, can be displayed simultaneously with the preferred content, in the form of video, for example, a movie or sports event or preferred content in the form of audio, for example, when a radio broadcast or musical content is being listened to on a content consumption device that has a video screen.

Accordingly, a channel need not necessarily be free, so long as a portion of the channel is available for playing the selected content. For example, in an analog TV broadcast, unused text space used to carry text pages to the TV screen, and which can be selected via a text mode, can be employed to play the selected content. In addition, in the case of Internet media distribution, for example, to a Windows Media Player running on a PC, and the like, the simultaneous display of the preferred and selected content can include popping up a corresponding window or windows, and the like.

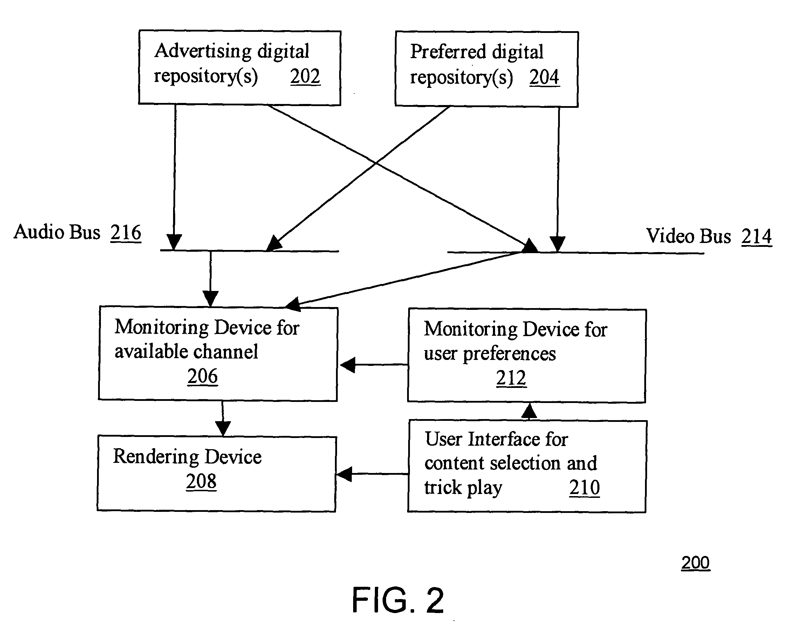

FIG. 2 is a diagram of a system or device 200 for delivering preferred and selected content, such as advertising content, according to an exemplary embodiment. In FIG. 2, the exemplary system or device 200 can include a repository 202 for selected content, such as advertising content, a repository 204 for preferred content, an available channel monitoring device, component or module 206, an audio and/or video rendering device, component or module 208, a user interface device, component or module 210, and a user preference monitoring device, component or module 212. The devices, components or modules 202-212 can communicate with each other over video bus 214 and audio bus 216 or over any suitable communications network.

In a further exemplary embodiment, a switching component or module configured to determine when to pull content from the repositories 202 and 204, and a repository filling component or module also can be provided. The repositories 202 and 204 can include any suitable content storage devices, such memory devices, hard disks, recording media, and the like.

Thus, the exemplary device or system 200 has access to the repositories 202 and 204 for the selected content, such as advertising content, and the preferred content. In further exemplary embodiments, however, more than two repositories can be employed or one repository can be employed for both the selected and preferred content, wherein a mechanism or component to differentiate the type of content can be provided, so that the appropriate content can be selected.

The content stored on the repositories 202 and 204 can include content that is audio in nature or video in nature or both. In further exemplary embodiments, such content can include content in any suitable form, such as text, web pages, a software program, etc., wherein the monitoring component or module 206 has access to the repositories 202 and/or 204 storing such content.

The rendering device 208, such as a television, a PC, audio device, etc., via the user interface 210, allows the user to select content from the repositories 202 and 204 for consumption. Depending on the nature of the content or other factors, the monitoring component or module 206 can select advertising content from the advertising repository 202 to place on an unused channel of the rendering device 208. As the user selects actions with the user interface 210, audio and/or video channels can become available for playing of the advertising content. As such channels become available, the monitoring component or module 206 provides the advertising content on the available channel or channels. The advertising content that can be provided can be selected, for example, based on an action selected by the user or a nature of the state that made a channel available. For example, if the user selects a muting action, a still picture or text message can be displayed, if the user selects a pausing action, music can be played or an audio and/or video advertisement displayed, and the like.

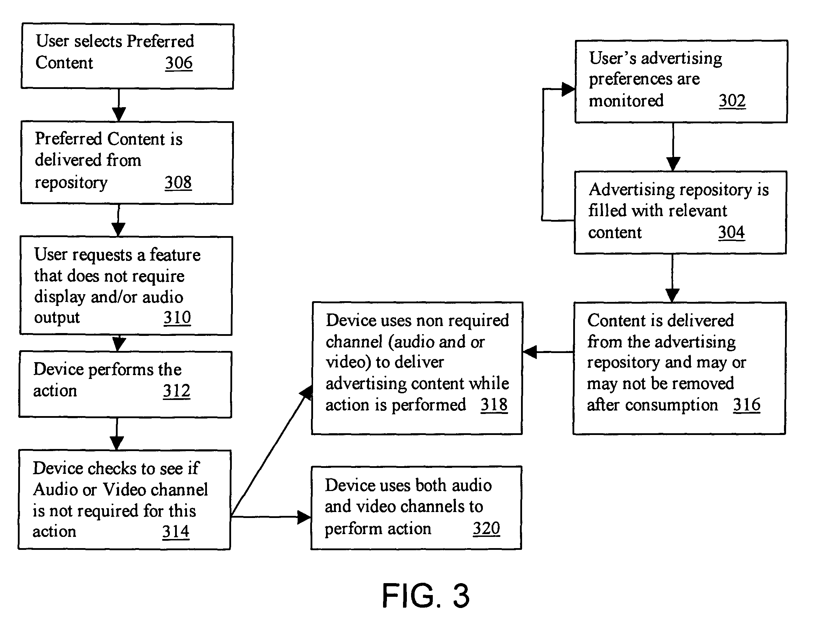

FIG. 3 is a flowchart illustrating a process for delivering preferred and advertising content in the system or device of FIG. 2, according to an exemplary embodiment. In FIG. 3, at step 302, preferences of a user (advertisement preferences, shopping preference, show preferences, purchase history, user input, etc.) can be monitored, for example, via the user preference monitoring device, component or module 212. At step 304, selected content based on such preferences, such as targeted advertising, can be made available to the repository 202. The preferences monitored need not be advertisements or pertain to things advertised. For example, if music is to be delivered, preferences relating to types of music preferred by the user can be monitored and corresponding content can be stored in the repository 202.

At step 306, a user can select preferred content to consume. At step 308, the preferred content can be delivered from a repository, such as the repository 204, in any suitable manner, for example over the air, internet, recorded media, removable media, non-removable media, etc. At step 310, the user can request or select a feature, for example, that makes available one or more audio and/or video channels on the exemplary device or system 200, such as pausing of audio and/or video content, and which action can be monitored, for example, via the available channel monitoring device, component or module 212. At step 312, the exemplary device or system 200 can be configured to perform the requested action. At step 314, the exemplary device or system 200 can be configured to detect that one or more of the audio and/or video channels are available. At step 316, the exemplary device or system 200 can be configured to identify and deliver corresponding audio and/or video content, such as targeted advertising, from the repository 202, and at step 318 play such content on the available audio and/or video channel. Optionally, at step 318, the exemplary device or system 200 can be configured, for example, to log and/or remove the used advertising content from the repository 202.

Although the exemplary embodiments are described in term of content consumption devices, for example, recording and/or playback devices, such personal video recorders, etc., the exemplary embodiments can be applied to other devices and applications, such as non-recording and/or non-playback devices and applications, and the like, as will be appreciated by those skilled in the relevant art(s). For example, the exemplary embodiments can be applied to a pay-per-view broadcast of a performance by a cable television company, and the like, wherein advertising content can be delivered before or after the performance broadcast or during any suitable break in the broadcast, such as when the user pauses the broadcast or if there is an intermission in the performance, and the like.

The exemplary embodiments can be applied to content already recorded before reaching the user, such as during to the playback of a music CD or video DVD, which a user purchases or rents. For example, when the consumer selects the pause feature of a DVD player, advertising content can be displayed during the pausing of the video. In an exemplary embodiment, and with equal application to further embodiments, the computing code employed to implement the exemplary processes, for example, can be hard coded in a device, such as DVD player, can reside on media, such as DVD media, can be stored at another location, wherein the device and/or media are configured to locate such computing code.

In an exemplary embodiment, the owner or deliverer of the selected content can provide an identification of when there is an available audio or video channel. For example, there programming code can be provided on media, such as a DVD disk, which causes a condition to be created every thirty minutes of play and which makes a channel available and results in delivery of advertising content. Similarly, during an over-the-air broadcast, an appropriate signal can be sent, which can trigger availability of a channel, resulting in the delivery of advertising content.

In further exemplary embodiments, advertising content need not be delivered. For example, if a user selects a commercial skipping action, the exemplary device or system 200 can be configured to send a message to an advertising content provider documenting that a corresponding action was performed. Advantageously, documenting, for example, incidences of skipping of commercials can be useful information for advertisers and broadcasters.

In the exemplary embodiments, a given action performed on a content consumption device can free up a channel on the content consumption device for playing the selected content. For example, the action of performing a pause function on the content consumption device can free up a channel that can be used to play an advertisement on the channel. In further exemplary embodiments, however, a given action may not require use of a channel for performing the action, in which case such a channel can be used to deliver the selected content.

Thus, the exemplary embodiments can be broadly applied to implementing any suitable response to any suitable action or state. Such action can be taken by a user, consumer or some other person, including the entity delivering or owning content or could be the result of the occurrence of an event. For example, the features of exemplary embodiments can be triggered by the calling of a TV timeout during a sports event, such as a football game, soccer game, boxing match, etc., wherein the advertising content delivered during such a timeout can include reruns of important plays or scores of other football games, and the content delivery can continue for the duration of the game being in the state of a timeout.

The devices and subsystems of the exemplary embodiments can communicate, for example, over a communications network, and can include any suitable servers, workstations, personal computers (PCs), laptop computers, PDAs, Internet appliances, set top boxes, modems, handheld devices, telephones, cellular telephones, wireless devices, other devices, and the like, capable of performing the processes of the disclosed exemplary embodiments. The devices and subsystems, for example, can communicate with each other using any suitable protocol and can be implemented using a general-purpose computer system, and the like. One or more interface mechanisms can be employed, for example, including Internet access, telecommunications in any suitable form, such as voice, modem, and the like, wireless communications media, and the like. Accordingly, communications networks employed can include, for example, wireless communications networks, cellular communications networks, satellite communications networks, Public Switched Telephone Networks (PSTNs), Packet Data Networks (PDNs), the Internet, intranets, hybrid communications networks, combinations thereof, and the like. In addition, the communications networks employed can be the same or different networks.

As noted above, it is to be understood that the exemplary embodiments are for exemplary purposes, as many variations of the specific hardware used to implement the disclosed exemplary embodiments are possible. For example, the functionality of the devices and the subsystems of the exemplary systems can be implemented via one or more programmed computer systems or devices. To implement such variations as well as other variations, a single computer system can be programmed to perform the special purpose functions of one or more of the devices and subsystems of the exemplary systems. On the other hand, two or more programmed computer systems or devices can be substituted for any one of the devices and subsystems of the exemplary systems. Accordingly, principles and advantages of distributed processing, such as redundancy, replication, and the like, also can be implemented, as desired, for example, to increase the robustness and performance of the exemplary embodiments.

The exemplary embodiments can be used to store information relating to various processes described herein. This information can be stored in one or more memories, such as a hard disk, optical disk, magneto-optical disk, RAM, and the like, of the devices and sub-systems of the exemplary systems. One or more databases of the devices and subsystems can store the information used to implement the exemplary embodiments. The databases can be organized using data structures, such as records, tables, arrays, fields, graphs, trees, lists, and the like, included in one or more memories, such as the memories listed above.

All or a portion of the exemplary embodiments can be conveniently implemented using one or more general-purpose computer systems, microprocessors, digital signal processors, micro-controllers, and the like, programmed according to the teachings of the disclosed exemplary embodiments. Appropriate software can be readily prepared by programmers of ordinary skill based on the teachings of the disclosed exemplary embodiments. In addition, the exemplary systems can be implemented by the preparation of application-specific integrated circuits or by interconnecting an appropriate network of component circuits.

Although an exemplary embodiment are described in terms of employing audio and/or video content distribution over a personal video recorder, the exemplary embodiments can be employed in any suitable environment. For example, the exemplary embodiments can be employed where a content distributor, who has been generating advertisement revenue by controlling time or space of a content consumption media or other means of accessing the content consumers, is losing such control due to the ability of consumers to use alternative means to bypass such control from the content distributor.

While the present invention have been described in connection with a number of exemplary embodiments and implementations, the present invention is not so limited but rather covers various modifications and equivalent arrangements, which fall within the purview of the appended claims.

## Claims

1. A computer-implemented method for distributing content to a content consumption device, comprising:
detecting an action performed on a content consumption device that makes available a channel of the device by performance of the action;
selecting content to be played on the device on the available channel; and
playing the selected content on the device on the available channel.

2. The method of claim 1, wherein the selected content includes advertising content.

3. The method of claim 2, further comprising providing a benefit to a user of the device in exchange for playing the advertising content.

4. The method of claim 1, wherein the detecting step includes determining when user preferred content is not being played by the device.

5. The method of claim 1, wherein the detecting step includes determining one of an available channel and unused channel on the device.

6. The method of claim 1, wherein the channel comprises one of an audio channel and a video channel of the device.

7. The method of claim 1, wherein the selected content comprises one of analog and digital content.

8. The method of claim 1, wherein the content consumption device comprises one of a personal video recorder device, and a DVD device.

9. The method of claim 1, wherein the detected action includes one of selection or initiation of a screen saver mode on the device, stopping playing of content on the device, pausing playing of content on the device, fast forwarding playing of content on the device, rewinding playing of content on the device, skipping of a commercial playing on the device, playing of a slide show on the device, muting playing of content on the device, and entering a radio mode on the device.

10. The method of claim 1, wherein the selected content includes one of a video, a cartoon, a audio file, and a personal message.

11. The method of claim 1, further comprising determining a preference of a user of the device, and including at least one of a shopping preference, a show preference, a purchase history, a music preference, and a video preference.

12. The method of claim 11, further comprising playing the selected content, comprising targeted content, based on the determined user preference.

13. The method of claim 1, further comprising playing the selected content one of before a broadcast, after a broadcast, during a break in a broadcast, during pausing of a broadcast, and during an intermission of a broadcast.

14. The method of claim 1, further comprising providing software code in the device for causing playing of the selected content.

15. The method of claim 1, further comprising providing software code in media used by the device for causing playing of the selected content.

16. The method of claim 1, further comprising transmitting a signal to the device for causing playing of the selected content.

17. The method of claim 1, further comprising providing an identification of the channel for playing the selected content by one of an owner, and deliverer of content to the device.

18. The method of claim 17, further comprising providing the identification in media used by the device.

19. The method of claim 17, wherein the identification is included in a broadcast to the device.

20. The method of claim 1, further comprising:
not performing the step of playing the selected content; and
generating a message documenting the detected action.

21. The method of claim 20, wherein the detected action includes skipping of a commercial being played on the device.

22. The method of claim 1, further comprising:
detecting of a timeout period during a sports event playing on the device; and
playing the selected content during the timeout period.

23. The method of claim 1, further comprising:
detecting of an intermission period during a broadcast playing on the device; and
playing the selected content during the intermission period.

24. The method of claim 1, further comprising:
distributing content to the content consumption device, including content that is at least one of segmented and labeled as preferred content, personalized advertisement content, and regional advertisement content.

25. The method of claim 1, wherein the available channel is not free, and further comprising:
playing the selected content on the device on a portion of the available channel; and
playing preferred content on the device on a remaining portion of the available channel.

26. A system for distributing content to a content consumption device, comprising:
means for detecting an action performed on a content consumption device that makes available a channel of the device by performance of the action;
means for selecting content to be played on the device on the available channel; and
means for playing the selected content on the device on the available channel.

27. The system of claim 26, wherein the means for detecting, the means for selecting, and the means for playing comprise devices of a computer system.

28. The system of claim 26, wherein the means for detecting, the means for selecting, and the means for playing comprise computer-readable instructions stored on a computer-readable medium.

29. A system configured to distribute content to a content consumption device, comprising:
an available channel monitoring device configured to detect an action performed on a content consumption device that makes available a channel of the content consumption device by performance of the action, and further configured to select content to be played on the content consumption device on the available channel; and
a rendering device configured to play the selected content on the content consumption device on the available channel.

30. The system of claim 29, further comprising:
a repository coupled to the available channel monitoring device and configured to store the selected content including advertising content.

31. The system of claim 30, wherein the system is configured to provide a benefit to a user of the content consumption device in exchange for playing the advertising content.

32. The system of claim 29, wherein the available channel monitoring device is further configured to determine when user preferred content is not being played by the content consumption device.

33. The system of claim 29, wherein the available channel monitoring device is further configured to determine one of an available channel and unused channel on the content consumption device.

34. The system of claim 29, wherein the channel comprises one of an audio channel and a video channel of the content consumption device.

35. The system of claim 29, wherein the selected content comprises one of analog and digital content.

36. The system of claim 29, wherein the content consumption device comprises one of a personal video recorder device, and a DVD device.

37. The system of claim 29, wherein the detected action includes one of selection or initiation of a screen saver mode on the content consumption device, stopping playing of content on the content consumption device, pausing playing of content on the content consumption device, fast forwarding playing of content on the content consumption device, rewinding playing of content on the content consumption device, skipping of a commercial playing on the content consumption device, playing of a slide show on the content consumption device, muting playing of content on the content consumption device, and entering a radio mode on the content consumption device.

38. The system of claim 29, wherein the selected content includes one of a video, a cartoon, a audio file, and a personal message.

39. The system of claim 29, further comprising a user preferences monitoring device configured to determine a preference of a user of the content consumption device, and including at least one of a shopping preference, a show preference, a purchase history, a music preference, and a video preference.

40. The system of claim 39, wherein the available channel monitoring device is configured to cause the rendering device to play the selected content, comprising targeted content, based on the determined user preference.

41. The system of claim 29, wherein the available channel monitoring device is configured to cause the rendering device to play the selected content one of before a broadcast, after a broadcast, during a break in a broadcast, during pausing of a broadcast, and during an intermission of a broadcast.

42. The system of claim 29, wherein the content consumption device is configured to employ software code to cause the rendering device to play the selected content.

43. The system of claim 29, wherein the content consumption device is configured to use software code in media used by the content consumption device to cause the rendering device to play the selected content.

44. The system of claim 29, wherein the content consumption device is configured to receive a signal to cause the rendering device to play the selected content.

45. The system of claim 29, wherein the content consumption device is configured to receive an identification of the channel for playing the selected content by one of an owner, and deliverer of content to the content consumption device.

46. The system of claim 45, wherein the content consumption device is configured to use the identification included in media used by the content consumption device.

47. The system of claim 45, wherein the content consumption device is configured to use the identification included in a broadcast to the content consumption device.

48. The system of claim 29, wherein the content consumption device is configured to not play the selected content, and further configured to generate a message documenting the detected action.

49. The system of claim 48, wherein the detected action includes skipping of a commercial being played on the content consumption device.

50. The system of claim 29, wherein the available channel monitoring device is configured to detect a timeout period during a sports event playing on the content consumption device, and further configured to play the selected content during the timeout period.

51. The system of claim 29, wherein the available channel monitoring device is configured to detect an intermission period during a broadcast playing on the content consumption device, and further configured to play the selected content during the intermission period.

52. The system of claim 29, wherein the content consumption device is configured to receive distributed content, including content that is at least one of segmented and labeled as preferred content, personalized advertisement content, and regional advertisement content.

53. The system of claim 29, wherein the available channel is not free, and the rendering device is configured to play the selected content on a portion of the available channel, and configured to play preferred content on a remaining portion of the available channel.

54. A content consumption device, comprising:
an available channel monitoring component configured to detect an action performed on the content consumption device that makes available a channel of the device by performance of the action, and further configured to select content to be played on the device on the available channel; and
a rendering component configured to play the selected content on the device on the available channel.

55. The device of claim 54, further comprising:
a repository coupled to the available channel monitoring component and configured to store the selected content including advertising content.

56. The device of claim 55, wherein the device is configured to provide a benefit to a user of the device in exchange for playing the advertising content.

57. The device of claim 54, wherein the available channel monitoring component is further configured to determine when user preferred content is not being played by the device.

58. The device of claim 54, wherein the available channel monitoring component is further configured to determine one of an available channel and unused channel on the device.

59. The device of claim 54, wherein the channel comprises one of an audio channel and a video channel of the device.

60. The device of claim 54, wherein the selected content comprises one of analog and digital content.

61. The device of claim 54, wherein the content consumption device comprises one of a personal video recorder device, and a DVD device.

62. The device of claim 54, wherein the detected action includes one of selection or initiation of a screen saver mode on the device, stopping playing of content on the device, pausing playing of content on the device, fast forwarding playing of content on the device, rewinding playing of content on the device, skipping of a commercial playing on the device, playing of a slide show on the device, muting playing of content on the device, and entering a radio mode on the device.

63. The device of claim 54, wherein the selected content includes one of a video, a cartoon, a audio file, and a personal message.

64. The device of claim 54, further comprising a user preferences monitoring component configured to determine a preference of a user of the device, and including at least one of a shopping preference, a show preference, a purchase history, a music preference, and a video preference.

65. The device of claim 64, wherein the available channel monitoring component is configured to cause the rendering component to play the selected content, comprising targeted content, based on the determined user preference.

66. The device of claim 54, wherein the available channel monitoring component is configured to cause the rendering component to play the selected content one of before a broadcast, after a broadcast, during a break in a broadcast, during pausing of a broadcast, and during an intermission of a broadcast.

67. The device of claim 54, wherein the device is configured to employ software code to cause the rendering component to play the selected content.

68. The device of claim 54, wherein the device is configured to use software code in media used by the device to cause the rendering component to play the selected content.

69. The device of claim 54, wherein the device is configured to receive a signal to cause the rendering component to play the selected content.

70. The device of claim 54, wherein the device is configured to receive an identification of the channel for playing the selected content by one of an owner, and deliverer of content to the device.

71. The device of claim 70, wherein the device is configured to use the identification included in media used by the device.

72. The device of claim 70, wherein the device is configured to use the identification included in a broadcast to the device.

73. The device of claim 54, wherein the device is configured to not play the selected content, and further configured to generate a message documenting the detected action.

74. The device of claim 73, wherein the detected action includes skipping of a commercial being played on the device.

75. The device of claim 54, wherein the available channel monitoring component is configured to detect a timeout period during a sports event playing on the device, and further configured to play the selected content during the timeout period.

76. The device of claim 54, wherein the available channel monitoring component is configured to detect an intermission period during a broadcast playing on the device, and further configured to play the selected content during the intermission period.

77. The device of claim 54, wherein the content consumption device is configured to receive distributed content, including content that is at least one of segmented and labeled as preferred content, personalized advertisement content, and regional advertisement content.

78. The device of claim 54, wherein the available channel is not free, and the rendering component is configured to play the selected content on a portion of the available channel, and configured to play preferred content on a remaining portion of the available channel.
